# EUROPÄISCHE PATENTSCHRIFT

(11) **EP 2 125 952 B1**
(45) Veröffentlichungstag und Bekanntmachung des Hinweises auf die Patenterteilung: **13.10.2010**
(21) Anmeldenummer: 08701027.8
(22) Anmeldetag: 09.01.2008
(51) Int. Cl.: C08L 69/00, C08L 51/08, C08L 51/04

(54) **SCHLAGZÄHMODIFIZIERTE POLYCARBONAT-ZUSAMMENSETZUNGEN**
IMPACT RESISTANT-MODIFIED POLYCARBONATE COMPOSITIONS
COMPOSITIONS DE POLYCARBONATE À RÉSILIENCE MODIFIÉE

(30) Priorität: 19.01.2007 DE 102007002925
(43) Veröffentlichungstag der Anmeldung: 02.12.2009
(73) Patentinhaber: Bayer MaterialScience AG, 51368 Leverkusen (DE)
(72) Erfinder: SEIDEL, Andreas, 41542 Dormagen (DE); FELDERMANN, Achim, 40477 Düsseldorf (DE)
(86) Internationale Anmeldenummer: PCT/EP2008/000090
(87) Internationale Veröffentlichungsnummer: WO 2008/086961

(56) Entgegenhaltungen:
- EP-A- 0 369 201
- US-A- 5 723 526
- US-B1- 6 197 857
- US-B1- 6 232 397
- US-B1- 6 417 319

## Beschreibung

Die vorliegende Erfindung betrifft schlagzähmodifizierte Polycarbonat-Zusammensetzungen und Formmassen mit guter Alterungsbeständigkeit, die sich durch einen niedrigen Glanz und guter Tieftemperaturzähigkeit auszeichnen, ein Verfahren zu ihrer Herstellung und ihre Verwendung zur Herstellung von Formkörpern.

Zusammensetzungen enthaltend Polycarbonat und Schlagzähmodifikatoren auf EPDM-Kautschukbasis (z.B. AES) oder Acrylatkautschukbasis (ASA) sind zwar verglichen mit entsprechenden PC/ABS-Zusammensetzungen alterungsstabil, weisen in der Regel aber eine unzureichende Tieftemperaturzähigkeit auf. Zusammensetzungen enthaltend Polycarbonat und Schlagzähmodifikatoren auf Basis von Silikonkautschuken oder silikonreichen Silikon-Acrylat-Kompositkautschuken sind verglichen mit entsprechenden PC/ABS-Zusämmensetzungen alterungsstabil und weisen in der Regel auch eine gute Tieftemperaturzähigkeit auf, daraus hergestellte Formteile zeichnen sich aber durch eine hochglänzende Oberflächenerscheinung aus. Zur Vermeidung einer Lackierung der Bauteile nach dem Spritzguss wird oft ein niedriger Glanz der Oberfläche von aus diesen Zusammensetzungen hergestellten Bauteilen gefordert.

DE-OS 2 037 419 offenbart Formmassen enthaltend Polycarbonat und kautschukartige Acrylatpolymeren (beispielsweise ein Pfropfpolymerisat aus Acrylnitril und Styrol auf Acrylatkautschuk, im folgenden als ASA bezeichnet) mit einer im Vergleich zu entsprechenden Polycarbonat/ABS-Zusammensetzungen verbesserten Beständigkeit gegen Haarrissbildung und Bewitterungsbeständigkeit.

US 4,550,138 offenbart Formmassen enthaltend 60 - 97 Gew.-% Polycarbonat und 3 - 40 Gew.-% AES Pfropfcopolymer mit einem Kautschukgehalt von 30 - 80 Gew.-%, die sich gegenüber reinem Polycarbonat durch eine verbesserte Zähigkeit bei nicht wesentlich verschlechterter Wärmeformbeständigkeit auszeichnen.

EP-A 0 369 201 offenbart Zusammensetzungen enthaltend Polycarbonat, ein auf Polysiloxan basiertes Pfropfcopolymer und ein Pfropfcopolymer auf Basis von Dienkautschuk (beispielsweise ABS).

WO-A 98/008900 offenbart Formmassen enthaltend aromatisches Polycarbonat, ein Pfropfpolymerisat auf der Basis von Alkylacrylaten, Styrolen und ungesättigten Nitrilen, ein Copolymerisat auf der Basis von Styrolen und ungesättigten Nitrilen, ein Siloxannetzwerkkautschuk (auf Basis von Silikon/Acrylat), ein Copolymeres aus mindestens zwei unterschiedlichen Estern der Acrylsäure oder der Methacrylsäure und gegebenenfalls weiteren Komponenten. Die Formmassen sind zäh bei tiefen Temperaturen und leicht fließend, wobei über den Glanz der resultierenden Formmassen nicht berichtet wird.

Aufgabe der vorliegenden Erfindung ist die Bereitstellung einer Formmasse, welche sich durch eine hohe Tieftemperaturzähigkeit und durch einen niedrigen Glanz bei hoher Wärmealterungsstabilität auszeichnen.

Es wurde überraschend gefunden, dass Zusammensetzungen enthaltend
A) aromatisches Polycarbonat und/oder aromatisches Polyestercarbonat,
B) ein erstes Pfropfpolymerisat von
   B.1 0,1 bis 30, vorzugsweise 5 bis 20 Gew.-% wenigstens eines Vinylmonomeren auf
   B.2 99,9 bis 70, vorzugsweise 95 bis 80 Gew.-% einer oder mehrerer Pfropfgrundlagen mit Glasübergangstemperaturen < 10°C, vorzugsweise < 0°C, besonders bevorzugt < - 20°C, wobei die Pfropfgrundlage zu mindestens 50 Gew.-% aus einem Silikonkautschuk besteht,
C) ein zweites Pfropfpolymerisat, welches von Komponente B verschieden ist, von C.1 5 bis 95, vorzugsweise 20 bis 90 Gew.-%, wenigstens eines Vinylmonomeren auf C.2 95 bis 5, vorzugsweise 80 bis 10 Gew.-% einer oder mehrerer Pfropfgrundlagen mit Glasübergangstemperaturen < 10°C, vorzugsweise < 0°C, besonders bevorzugt < - 20°C, wobei die Pfropfgrundlage zu mindestens 50 Gew.-% aus einem EPDM-Kautschuk besteht,
D) gegebenenfalls kautschukfreies Vinyl(Co)Polymerisat (D.1) und/oder Polyalkylenterephthalat (D.2), und
E) gegebenenfalls Polymeradditive,
   wobei die Zusammensetzung
   10 bis 92, bevorzugt 30 bis 80, besonders bevorzugt 40 bis 75 Gew.-Teile Komponente A,
   8 bis 90, bevorzugt 10 bis 70, besonders bevorzugt 12 bis 30 Gew.-Teile an der Summe der Komponenten B und C,
   0 bis 35, bevorzugt 1 bis 30, besonders bevorzugt 4 bis 28 Gew.-Teile Komponente D und
   0 bis 30, bevorzugt 0,1 bis 10, besonders bevorzugt 0,1 bis 5 Gew.-Teile Komponente E enthält,
   wobei die Komponenten B und C in einem Verhältnis (B : C) im Bereich von 20 : 80 bis 80 : 20 bevorzugt 25 : 75 bis 75 : 25, besonders bevorzugt 35 : 65 bis 45 : 55 vorliegen und
   wobei alle Gewichtsteilangaben in der vorliegenden Anmeldung so normiert sind, dass die Summe
   der Gewichtsteile der Komponenten A+B+C+D+E in der Zusammensetzung 100 ergeben, das gewünschte Eigenschaftsprofil aufweisen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 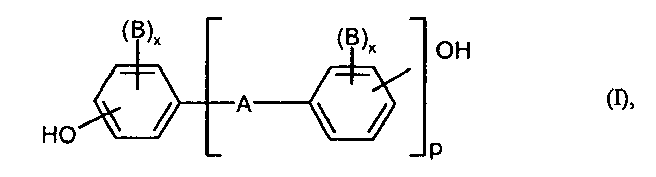 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 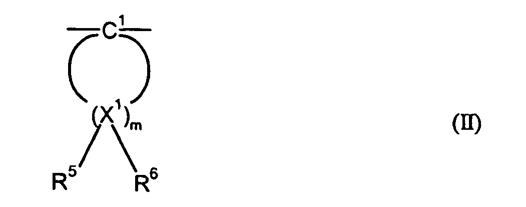 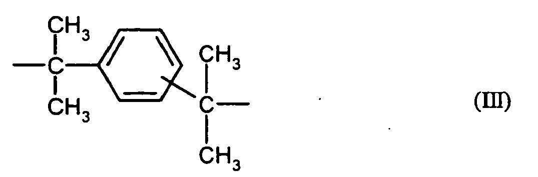
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆- Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.
Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein erstes Pfropfpolymerisat von
- B.1: 0,1 bis 30, vorzugsweise 5 bis 20 Gew.-% wenigstens eines Vinylmonomeren auf
- B.2: 99,9 bis 70, vorzugsweise 95 bis 80 Gew.-% einer oder mehrerer Pfropfgrundlagen mit einer Glasübergangstemperatur < 10°C, vorzugsweise < 0°C, besonders bevorzugt < - 20°C, wobei die Pfropfgrundlage zu mindestens 50 Gew.-% aus einem Silikonkautschuk besteht.

Die Pfropfgrundlage B.2 hat im allgemeinen eine mittlere Teilchengröße (d₅₀-Wert) von 0,05 bis 10 µm, vorzugsweise 0,05 bis 5 µm, besonders bevorzugt 0,1 bis 1 µm.

Monomere B.1 bestehen vorzugsweise aus Vinylmonomeren ausgewählt
- B.1.1: aus einer ersten Gruppe bestehend aus (Meth)Acrylsäure-(C₁-C₈)-Alkylester (wie Methylmethacrylat, Ethylmethacrylat, n-Butylacrylat, t-Butylacrylat) und/oder
- B.1.2: aus einer zweiten Gruppe bestehend aus Vinylaromaten und/oder kernsubstituierten Vinylaromaten (wie Styrol, α-Methylstyrol, p-Methylstyrol, p-Chlorstyrol), und/oder Vinylcyanide (ungesättigte Nitrile wie Acrylnitril und Methacrylnitril) und/oder Derivate (wie Anhydride und Imide) ungesättigter Carbonsäuren, beispielsweise Maleinsäureanhydrid und N-Phenyl-Maleinimid.

In einer bevorzugten Ausführungsform der Erfindung sind die Monomere B.1 zu mindestens 50 Gew.-% ausgewählt aus der ersten Gruppe B.1.1. In einer besonders bevorzugten Ausführungsform bestehen die Monomere B.1 zu mindestens 50 Gew.-%, bevorzugt zu mindestens 80 Gew.-%, insbesondere zu mindestens 95 Gew.-% bezogen auf die Komponente B.1 aus Methylmethacrylat.

Für die Pfropfpolymerisate B geeignete Pfropfgrundlagen B.2 bestehen vorzugsweise aus mindestens 50 Gew.-%, besonders bevorzugt zu 70 bis 100 Gew.-%, insbesondere bevorzugt zu 70 bis 98 Gew.-% Silikonkautschuk und aus bis zu 50 Gew.-%, besonders bevorzugt bis zu 30 Gew.-%, insbesondere bevorzugt aus 2 bis 30 Gew.-% eines oder mehrer Kautschuke ausgewählt aus der Gruppe bestehend aus Dienkautschuke, EP(D)M-Kautschuke (d.h. Kautschuke auf Basis Ethylen/Propylen und gegebenenfalls Dien), Acrylat-, Polyurethan-, Silikon-, Chloropren und Ethylen/Vinylacetat-Kautschuke.

Besonders bevorzugte Pfropfgrundlagen B.2 sind Gemische von mindestens 50 Gew.-%, höchst bevorzugt zu 70 bis 98 Gew.-% Silikonkautschuk mit bis zu 50 Gew.-%, höchst bevorzugt mit 2 bis 30 Gew.-% Acrylatkautschuk, wobei die beiden Kautschuktypen herstellungsbedingt ein interpenetrierendes Netzwerk ausbilden oder auch als Kern-Schale-Struktur vorliegen können.

Der Gelanteil der Pfropfgrundlage B.2 beträgt besonders bevorzugt mindestens 30 Gew.-%, besonders bevorzugt mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl-und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid. Z. und Z. Polymere 250 (1972), 782-796) bestimmt werden.

### Komponente C

Die Komponente C umfasst ein zweites Pfropfpolymerisat, welches von Komponente B verschieden ist, von
- C.1: 5 bis 95, vorzugsweise 30 bis 90 Gew.-%, wenigstens eines Vinylmonomeren auf
- C.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Pfropfgrundlage zu mindestens 50 Gew.-% aus einem EPDM-Kautschuk besteht.

Die Pfropfgrundlage C.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere C.1 sind vorzugsweise Gemische aus
- C.1.1: 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁- C₈)-Alkylester, wie Methylmethacrylat, Ethylmethacrylat), und
- C.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methyl- methacrylat, n-Butylacrylat, t-Butylacrylat, und/oder Derivate (wie Anhydride und Imide) ungesättigter Carbonsäuren, beispielsweise Maleinsäureanhydrid und N-Phenyl- Maleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril.

Für die Pfropfpolymerisate C geeignete Pfropfgrundlagen C.2 bestehen vorzugsweise aus mindestens 50 Gew.-%, besonders bevorzugt aus mindestens 80 Gew.-% EPDM-Kautschuk (d.h. Kautschuke auf Basis Ethylen/Propylen und einem Dien) und aus bis zu 50 Gew.-%, besonders bevorzugt aus bis zu 20 Gew.-% eines oder mehrerer Kautschuke ausgewählt aus der Gruppe bestehend aus Dienkautschuke, Silikonkautschuke, Acrylat-, Polyurethan-, Silikon-, Chloropren und Ethylen/Vinylacetat-Kautschuke.

Die insbesondere bevorzugte Pfropfgrundlage C.2 besteht aus reinem EPDM-Kautschuk, d.h aus einem Kautschuk auf Basis Ethylen/Propylen und einem Dien, wobei das Dien vorzugsweise 5-Ethyliden-2 Norbomen ist.

Der Gelanteil der Pfropfgrundlage C.2 beträgt bevorzugt mindestens 30 Gew.-%, besonders bevorzugt mindestens 40 Gew.-% (in Toluol gemessen).

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente D

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- D.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- D.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, *t*-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol-und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente E

Die Zusammensetzung kann weitere handelsübliche Polymeradditive wie Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkylsulfonate oder Polyamid-haltige Polymere), Füll- und Verstärkungsstoffe (beispielsweise Glas- oder Karbonfasern, Glimmer, Kaolin, Talk, CaCO₃ und Glasschuppen) sowie Farbstoffe und Pigmente enthalten.

Als Flammschutzmittel werden vorzugsweise phosphorhaltige Flammschutzmittel, insbesondere ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden. Beispielsweise sind als Phosphorverbindungen geeignet: Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Di- bzw. Oligophosphat und Bisphenol A verbrücktes Di- bzw. Oligophosphat. Der Einsatz von oligomeren Phosphorsäureestern der, die sich vom Bisphenol A ableiten, ist insbesondere bevorzugt. Als Flammschutzmittel geeignete Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern.

Die erfindungsgemäßen Formmassen können zur Herstellung von Formkörpern jeder Art verwendet werden. Diese können zum Beispiel durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär-und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A

Lineares Polycarbonat auf Basis Bisphenol-A mit einem gewichtsgemittelten Molekulargewicht M̅_{w} von 27500 g/mol (bestimmt durch GPC).

### Komponente B1

Pfropfpolymerisat bestehend aus 11 Gew.-% Polymethylmethacrylat auf 89 Gew.-% einer Pfropfgrundlage bestehend aus 92 Gew.-% Silikonkautschuk und 8 Gew.-% Butylacrylatkautschuk.

### Komponente B2 (Vergleich)

Pfropfpolymerisat bestehend aus 28 Gew.-% Styrol-Acrylnitril Copolymer auf 72 Gew.-% einer Pfropfgrundlage aus 46 Gew.-% Silikonkautschuk und 54 Gew.-% Butylacrylatkautschuk.

### Komponente B3 (Vergleich)

Pfropfpolymerisat bestehend aus 17 Gew.-% Polymethylmethacrylat auf 83 Gew.-% einer Pfropfgrundlage bestehend aus 11 Gew.-% Silikonkautschuk und 89 Gew.-% Butylacrylatkautschuk.

### Komponente C1

Pfropfpolymerisat bestehend aus 30 Gew.-% Acrylnitril und Styrol auf 70 Gew.-% einer Pfropfgrundlage bestehend aus EPDM-Kautschuk, wobei das Dien 5-Ethyliden-2 Norbornen ist. Die mittlere Teilchengröße der Pfropfgrundlage (d₅₀) beträgt ca. 250 nm.

### Komponente C2 (Vergleich)

Pfropfpolymerisat bestehend aus 25 % Polymethylmethacrylat auf 75 % einer Pfropfgrundlage aus Butylacrylat-Kautschuk.

### Komponente C3 (Vergleich)

Pfropfpolymerisat bestehend aus 39 Gew.-% Acrylnitril und Styrol auf 61 Gew.-% einer Pfropfgrundlage aus Butylacrylatkautschuk.

### Komponente C4 (Vergleich)

ABS-Polymerisat, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchendurchmesser d₅₀ = 0,35 µm).

### Komponente D

Styrol/Arylnitril-Copolymerisat mit einem Styrol/ Acrylnitril-Gewichtsverhältnis von 72:28 und einer Grenzviskosität von 0,55 dl/g (Messung in Dimethylformamid bei 20°C).

### Komponenten E

- **E1:**: Pentaerythrittetrastearat als Gleit-/Entformungsmittel
- **E2**: Phosphitstabilisator, Irganox^{®} B 900, Fa. Ciba Speciality Chemicals
- **E3**: Black Pearls 800, Fa. Cabot Europa G.I.E., Suresnes, Frankreich

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Massetemperatur von 260°C compoundiert und nachfolgend granuliert. Die fertigen Granulate werden auf einer Spritzgussmaschine zu den entsprechenden Probekörpern verarbeitet (Massetemperatur 260 °C, Werkzeugtemperatur 80°C, Fließfrontgeschwindigkeit 240 mm/s).

Zur Charakterisierung der Eigenschaften der Probekörper werden folgende Methoden angewandt:

Die Glanzbeurteilung der Kunststoff-Oberflächen erfolgt nach DIN 67 530 an Prüfkörpern der Dimension 60 mm x 40 mm x 2 mm bei einem Messwinkel (im folgenden auch als Einstrahlwinkel bezeichnet) von 20°.

Der Durchstoßversuch wird in Anlehnung an ISO 6603-2 bei einer Temperatur von -30°C durchgeführt. Dabei werden die Bruchbilder von insgesamt zehn Prüfkörpern dahingehend beurteilt, ob im überwiegenden Anteil (mind. 80 %), d.h. bei mindestens 8 von 10 Experimenten ein splitterfreies Versagen auftritt.

Für die Wärmealterung wurden Probekörper bei 100°C über einen Zeitraum von 500h gemäß DIN IEC 60216-1 gelagert. Anschließend wurden die Probekörper einem Durchstoßversuch in Anlehnung an ISO 6603-2 bei einer Temperatur von -30°C unterzogen.

**Tabelle: mechanische Eigenschaften der Formmassen**

| Zusammensetzung [Gew.-%] | **1** | **2** | **3** | **4** | **5** | **6** (Vgl.) | **7** (Vgl.) | **8** (Vgl.) | **9** (Vgl.) | **10** (Vgl.) | **11** (Vgl.) | **12** (Vgl.) | **13** (Vgl.) | **14** (Vgl.) | **15** (Vgl.) | **16** (Vgl.) |
|---|---|---|---|---|---|---|---|---|---|---|---|---|---|---|---|---|
| A | 57,08 | 57,08 | 57,08 | 57,08 | 71,32 | 57,08 | 57,08 | 57,08 | 57,08 | 44,62 | 57,08 | 57,08 | 57,08 | 57,08 | 57,08 | 57,08 |
| B1 | 4,92 | 6,89 | 8,86 | 12,79 | 8,57 | | 1,97 | 15,74 | 17,71 | 5,31 | | | 6,89 | 6,89 | 6,89 | |
| B2 | | | | | | | | | | | 6,89 | | | | | |
| B3 | | | | | | | | | | | | 6,89 | | | | |
| C1 | 12,79 | 10,82 | 8,86 | 4,92 | 13,49 | 17,71 | 15,74 | 1,97 | | 8,47 | 10,82 | 10,82 | | | | 10,82 |
| C2 | | | | | | | | | | | | | | | 10,82 | |
| C3 | | | | | | | | | | | | | | 10,82 | | |
| C4 | | | | | | | | | | | | | 10,82 | | | 6,89 |
| D | 23,62 | 23,62 | 23,62 | 23,62 | 5,02 | 23,62 | 23,62 | 23,62 | 23,62 | 40,00 | 23,62 | 23,62 | 23,62 | 23,62 | 23,62 | 23,62 |
| E1 | 0,74 | 0,74 | 0,74 | 0,74 | 0,74 | 0,74 | 0,74 | 0,74 | 0,74 | 0,74 | 0,74 | 0,74 | 0,74 | 0,74 | 0,74 | 0,74 |
| E2 | 0,12 | 0,12 | 0,12 | 0,12 | 0,12 | 0,12 | 0,12 | 0,12 | 0,12 | 0,12 | 0,12 | 0,12 | 0,12 | 0,12 | 0,12 | 0,12 |
| E3 | 0,74 | 0,74 | 0,74 | 0,74 | 0,74 | 0,74 | 0,74 | 0,74 | 0,74 | 0,74 | 0,74 | 0,74 | 0,74 | 0,74 | 0,74 | 0,74 |
| Bruchbild, Durchstoß (-30°C) | zäh | zäh | zäh | zäh | zäh | spröd | spröd | zäh | zäh | spröd | zäh | spröd | zäh | zäh | zäh | zäh |
| Bruchbild nach 500 h / 100°C | | | zäh | | | | spröd | zäh | | | | | | | | |
| Glanz (20°)¹⁾ | 53,6 | 49,8 | 51,6 | 53,8 | 38,3 | 60,5 | 65 | 74,5 | 74,3 | 69,6 | 86,8 | 78,4 | 89,2 | 91,7 | 89,0 | 83,6 |

| | | | | | | | | | | | | | | | | |
|---|---|---|---|---|---|---|---|---|---|---|---|---|---|---|---|---|
| 1) Einstrahlwinkel | | | | | | | | | | | | | | | | |

Die Beispiele zeigen, dass nur mit der Kombination aus B1 und C1 - und auch nur in einem begrenzten Konzentrationsbereich - die gewünschte Reduktion des Oberflächenglanzes erreicht wird.

Aus den Beispielen 1-5 und den Vergleichsbeispielen 6-9 geht hervor, dass die Reduzierung des Glanzes im Bereich von 20:80 bis 80: 20 bezogen auf das Verhältnis von B1 zu C1 auftritt.

Wie aus Beispiel 2 und den Vergleichsbeispielen 11 und 12 deutlich wird, ist eine Reduzierung des Glanzes nur bei Verwendung des speziellen Silikon/Acrylat Modifikators B1 zu erreichen, nicht aber mit B2 oder B3. Die Kombination von B1 mit Schlagzähmodifikatoren auf Basis Polybutadien (C4, Vergleichsbeispiel 13) oder Acrylat (C2 und C3, Vergleichsbeispiele 14 und 15) führt nicht zum Ziel. Auch die Kombination von C1 mit einem Schlagzähmodifikator auf Basis Polybutadien (C4, Vergleichsbeispiel 16) bringt nicht die gewünschte Eigenschaftskombination.

Bei der Verwendung von B1 und C1 darf zusätzlich eine bestimmte Menge an SAN (Komponente D) nicht überschritten werden. Bei gleichem Verhältnis A:B:C wurde die Konzentration an D von 5,02 (Bsp. 5) über 23,62 (Bsp. 2) auf 40 (Vergleichsbeispiel 10) gesteigert. Wie aus der Tabelle hervorgeht, wurde bei dieser Serie ein reduzierter Oberflächenglanz nur bei den Beispielen 2 und 5 erzielt.

## Patentansprüche

1. Zusammensetzungen enthaltend
A) aromatisches Polycarbonat und/oder aromatisches Polyestercarbonat,
B) ein erstes Pfropfpolymerisat von
B.1 0,1 bis 30 Gew.-% wenigstens eines Vinylmonomeren auf
B.2 99,9 bis 70 einer oder mehrerer Pfropfgrundlagen mit Glasübergangstemperaturen < 10°C, wobei die Pfropfgrundlage zu mindestens 50 Gew.-% aus einem Silikonkautschuk besteht,
C) ein zweites Pfropfpolymerisat, welches von Komponente B verschieden ist, von
C.1 5 bis 95 Gew.-% wenigstens eines Vinylmonomeren auf
C.2 95 bis 5 Gew.-% einer oder mehrerer Pfropfgrundlagen mit Glasübergangstemperaturen < 10°C, wobei die Pfropfgrundlage zu mindestens 50 Gew.-% aus einem EPDM-Kautschuk besteht,
D) kautschukfreies Vinyl(Co)Polymerisat und/oder Polyalkylenterephthalat, und
E) Polymeradditive,
wobei die Komponenten B und C in einem Verhältnis (B : C) im Bereich von 20 : 80 bis 80 : 20 vorliegen und
wobei die Zusammensetzung
10 bis 92 Gew.-Teile Komponente A,
8 bis 90 Gew.-Teile an der Summe der Komponenten B und C,
0 bis 35 Gew.-Teile Komponente D und
0 bis 30 Gew.-Teile Komponente E enthält.
wobei alle Gewichtsteilangaben so normiert sind, dass die Summe der Gewichtsteile der Komponenten A+B+C+D+E in der Zusammensetzung 100 ergeben.

2. Zusammensetzungen nach Anspruch 1, wobei die Komponenten B und C in einem Verhältnis (B : C) im Bereich von 35 : 65 bis 45 : 55 vorliegen.

3. Zusammensetzung gemäß Anspruch 1 oder 2, wobei die Pfropfgrundlage B.2 aus mindestens 50 Gew.-% Silikonkautschuk und aus bis zu 50 Gew.-% eines oder mehre Kautschuke ausgewählt aus der Gruppe bestehend aus Dienkautschuke, EP(D)M-Kautschuke, Acrylat-, Polyurethan-, Silikon-, Chloropren und Ethylen/Vinylacetat-Kautschuke besteht.

4. Zusammensetzung gemäß Anspruch 3, wobei die Pfropfgrundlage B.2 ein Gemisch von 70 bis 98 Gew.-% Silikonkautschuk mit 2 bis 30 Gew.-% Acrylatkautschuk ist.

5. Zusammensetzung gemäß Ansprüche 1 bis 4, wobei die Pfropfgrundlage C.2 aus mindestens 50 Gew.-% EPDM-Kautschuke und aus bis zu 50 Gew.-% eines oder mehrer Kautschuke ausgewählt aus der Gruppe bestehend aus Dienkautschuke, Silikonkautschuke, Acrylat-, Polyurethan-, Silikon-, Chloropren und Ethylen/Vinylacetat-Kautschuke besteht.

6. Zusammensetzung gemäß Anspruch 5, wobei die Pfropfgrundlage C.2 EPDM-Kautschuk ist.

7. Zusammensetzung gemäß Ansprüche 1 bis 6, wobei als Polymeradditiv mindestens eine Komponente ausgewählt aus der Gruppe bestehend aus Flammschutzmittel, Flammschutzsynergisten, Antidrippingmittel, Gleit- und Entformungsmittel, Nukleiermittel, Stabilisatoren, Antistatika, Füll- und Verstärkungsstoffe sowie Farbstoffe und Pigmente enthalten ist.

8. Verwendung der Zusammensetzungen nach einem der Ansprüche 1 bis 7 zur Herstellung von Formkörpern.

9. Formkörper, enthaltend eine Zusammensetzung nach einem der Ansprüche 1 bis 7.

10. Formkörper gemäß Anspruch 9 **dadurch gekennzeichnet, dass** der Formkörper ein Teil eines Kraftfahrzeugs, Schienenfahrzeugs, Luftfahrzeugs oder Wasserfahrzeugs oder ein Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen oder ein Gehäuse für Gartengeräte ist.

## Claims

1. Compositions comprising
A) aromatic polycarbonate and/or aromatic polyester carbonate,
B) a first graft polymer of
B.1 from 0.1 to 30% by weight of at least one vinyl monomer on
B.2 from 99.9 to 70 of one or more graft bases with glass transition temperatures < 10°C, where the graft base is composed of at least 50% by weight of a silicone rubber,
C) a second graft polymer, which differs from component B, of
C.1 from 5 to 95% by weight of at least one vinyl monomer on
C.2 from 95 to 5% by weight of one or more graft bases with glass transition temperatures < 10°C, where the graft base is composed of at least 50% by weight of an EPDM rubber,
D) rubber-free vinyl (co)polymer and/or polyalkylene terephthalate, and
E) polymer additives,
where components B and C are present in a ratio (B : C) which is in the range from 20 : 80 to 80 : 20 and where the composition comprises
from 10 to 92 parts by weight of component A,
from 8 to 90 parts by weight of the entirety of components B and C,
from 0 to 35 parts by weight of component D and
from 0 to 30 parts by weight of component E,
where all of the parts by weight data have been standardized in such a way that the total of the parts by weight of components A + B + C + D + E in the composition is 100.

2. Compositions according to Claim 1, where components B and C are present in a ratio (B : C) which is in the range from 35 : 65 to 45 : 55.

3. Composition according to Claim 1 or 2, where the graft base B.2 is composed of at least 50% by weight of silicone rubber and of up to 50% by weight of one or more rubbers selected from the group consisting of diene rubbers, EP(D)M rubbers, acrylate rubbers, polyurethane rubbers, silicone rubbers, chloroprene and ethylene/vinyl acetate rubbers.

4. Composition according to Claim 3, where the graft base B.2 is a mixture of from 70 to 98% by weight of silicone rubber with from 2 to 30% by weight of acrylate rubber.

5. Composition according to Claims 1 to 4, where the graft base C.2 is composed of at least 50% by weight of EPDM rubbers and of up to 50% by weight of one or more rubbers selected from the group consisting of diene rubbers, EP(D)M rubbers, acrylate rubbers, polyurethane rubbers, silicone rubbers, chloroprene and ethylene/vinyl acetate rubbers.

6. Composition according to Claim 5, where the graft base C.2 is EPDM rubber.

7. Composition according to Claims 1 to 6, where there is present as polymer additive at least one component selected from the group consisting of flame retardants, flame retardant synergists, antidrip agents, lubricants and mould-release agents, nucleating agent, stabilizers, antistatic agents, fillers and reinforcing materials, and dyes and pigments.

8. Use of the compositions according to any of Claims 1 to 7 for producing mouldings.

9. Moulding comprising a composition according to any of Claims 1 to 7.

10. Moulding according to Claim 9, **characterized in that** the moulding is a part of a motor vehicle, rail vehicle, aircraft or watercraft, or is a housing of electrical devices comprising small transformers, a housing for devices for the processing and transmission of information, a housing or cladding of medical devices, or is a massage device or housing for the same, a toy vehicle for children, a flat wall element, a housing for security/safety equipment, a thermally insulated transport container, a moulding for sanitary and bath equipment, a protective grille for ventilator openings, or a housing for garden equipment.

## Revendications

1. Compositions contenant
A) un polycarbonate aromatique et/ou un polyestercarbonate aromatique,
B) un premier polymère greffé de
B.1 0,1 à 30 % en poids d'au moins un monomère de vinyle sur
B.2 99,9 à 70 d'une ou de plusieurs bases de greffage ayant des températures de transition vitreuse < 10 °C, la base de greffage étant constituée à au moins 50 % en poids d'un caoutchouc de silicone,
C) un second polymère greffé, qui est différent du composant B), de
C.1 5 à 95 % en poids d'au moins un monomère de vinyle sur
C.2 95 à 5 % en poids d'une ou de plusieurs bases de greffage ayant des températures de transition vitreuse < 10 °C, la base de greffage étant constituée à au moins 50 % en poids d'un caoutchouc EPDM,
D) un (co)polymère de vinyle exempt de caoutchouc et/ou un polyalkylène téréphtalate, et
E) des additifs polymères,
les composants B et C étant présents en un rapport (B:C) dans la plage allant de 20:80 à 80:20 et
la composition contenant
10 à 92 parties en poids du composant A,
8 à 90 parties en poids de la somme des composants B et C
0 à 35 parties en poids du composant D et
0 à 30 parties en poids du composant E,
toutes les données de parties en poids étant normées de manière à ce que la somme des parties en poids des composants A+B+C+D+E dans la composition soit de 100.

2. Compositions selon la revendication 1, dans lesquelles les composants B et C sont présents en un rapport (B:C) dans la plage allant de 35:65 à 45:55.

3. Composition selon la revendication 1 ou 2, dans laquelle la base de greffage B.2 est constituée d'au moins 50 % en poids de caoutchouc de silicone et de jusqu'à 50 % en poids d'un ou de plusieurs caoutchoucs choisis dans le groupe constitué par les caoutchoucs diéniques, les caoutchoucs EP(D)M, les caoutchoucs d'acrylate, de polyuréthanne, de silicone, de chloroprène et d'acétate de vinyle/éthylène.

4. Composition selon la revendication 3, dans laquelle la base de greffage B.2 est un mélange de 70 à 98 % en poids de caoutchouc de silicone avec 2 à 30 % en poids de caoutchouc d'acrylate.

5. Composition selon les revendications 1 à 4, dans laquelle la base de greffage C.2 est constituée d'au moins 50 % en poids de caoutchouc EPDM et de jusqu'à 50 % en poids d'un ou de plusieurs caoutchoucs choisis dans le groupe constitué par les caoutchoucs diéniques, les caoutchoucs EP(D)M, les caoutchoucs d'acrylate, de polyuréthanne, de silicone, de chloroprène et d'acétate de vinyle/éthylène.

6. Composition selon la revendication 5, dans laquelle la base de greffage C.2 est du caoutchouc EPDM.

7. Composition selon les revendications 1 à 6, dans laquelle au moins un composant choisi dans le groupe constitué par les agents ignifuges, les synergistes ignifuges, les agents anti-égouttement, les agents lubrifiants et de démoulage, les agents de nucléation, les stabilisateurs, les antistatiques, les charges et substances renforçantes, ainsi que les colorants et les pigments, est contenu en tant qu'additif polymère.

8. Utilisation des compositions selon l'une quelconque des revendications 1 à 7 pour la fabrication de corps moulés.

9. Corps moulé, contenant une composition selon l'une quelconque des revendications 1 à 7.

10. Corps moulé selon la revendication 9, **caractérisé en ce que** le corps moulé est une partie d'une automobile, d'un véhicule sur rails, d'un aéronef ou d'un bateau, ou un boîtier de petits transformateurs contenant des appareils électroniques, un boîtier pour appareils pour le traitement et le transfert d'informations, un boîtier et un revêtement d'appareils médicaux, des appareils de massage et un boîtier pour ceux-ci, des véhicules-jouets pour enfants, des éléments muraux plats, un boîtier pour équipements de sécurité, des contenants de transport isolés thermiquement, des pièces moulées pour équipements sanitaires et de salles de bains, une grille pour ouvertures d'aération ou un boîtier pour outils de jardin.
